Europäisches Patentamt

European Patent Office

Office européen des brevets

(19)

(11) Veröffentlichungsnummer: **0 205 030**
**B1**

(12) EUROPÄISCHE PATENTSCHRIFT

(45) Veröffentlichungstag der Patentschrift: 01.08.90

(51) Int. Cl.⁵: **B 23 Q 3/157**

(21) Anmeldenummer: 86107158.7

(22) Anmeldetag: 27.05.86

(54) Werkzeugmaschine.

(30) Priorität: 12.06.85 DE 3521009

(43) Veröffentlichungstag der Anmeldung:
17.12.86 Patentblatt 86/51

(45) Bekanntmachung des Hinweises auf die
Patenterteilung:
01.08.90 Patentblatt 90/31

(84) Benannte Vertragsstaaten:
CH FR GB IT LI SE

(56) Entgegenhaltungen:
EP-A-0 106 081      FR-A-2 108 232
EP-A-0 157 950      FR-A-2 391 030
EP-A-0 163 277      US-A-3 200 492
FR-A-1 507 373

WERKSTATT UND BETRIEB, Band 105, Nr. 3,
März 1972, Seiten 213-217, München, DE; H.
MÖNKEMÖLLER: "Werkzeugmaschinen für ein
automatisches Fertigungssystem"

MACHINERY AND PRODUCTION
ENGINEERING, Band 133, Nr. 3422, 2. August
1978, Seiten 17-20, Burgess Hill, Sussex, GB;
"Time to take action on the ASP report"

(73) Patentinhaber: Chiron-Werke GmbH
Talstrasse 23
D-7200 Tuttlingen (DE)

(72) Erfinder: Winkler, Hans-Henning, Dr.
Brunnentalstrasse 88
D-7200 Tuttlingen (DE)
Erfinder: Rütschle, Eugen
Schönenbergstrasse 20
D-7202 Mühlheim/Donau (DE)

(74) Vertreter: Witte, Alexander, Dr.-Ing.
Augustenstrasse 7
D-7000 Stuttgart 1 (DE)

**Beschreibung**

Die Erfindung betrifft eine Werkzeugmaschine mit einem Spindelstock, mit mindestens einem Werkzeugmagazin, in dem eine Mehrzahl von mit Werkzeugen bestückten Werkzeughaltern entlang einer Endlosbahn in einer Ebene senkrecht zur Achse des Spindelstocks verfahrbar ist und mit zwei Greifarmen zum Transportieren der Werkzeughalter zwischen beidseits des Spindelstocks befindlichen Entnahme- bzw. Bestückungspositionen im Werkzeugmagazin und einer Spindelposition in einem Spindelkopf des Spindelstocks.

Eine derartige Werkzeugmaschine ist aus der US-A-3 200 492 bekannt.

Die bekannte Werkzeugmaschine weist einen nur in der Höhe verfahrbaren Spindelstock auf, unter dem sich ein in zwei Horizontalkoordinaten verfahrbarer Werkstücktisch befindet. Auf beiden Seiten des Spindestocks ist je ein Werkzeugmagazin angeordnet, das mit dem Spindelstock starr verbunden ist. Die beiden Werkzeugmagazine haben im wesentlichen die Konfiguration eines Karussells mit zur Spindelachse paralleler Drehachse und sie sind so in einer Horizontalebene verdrehbar, daß eine frei vorgebbare position am Außenumfang des Karussells in die Nähe eines Spindelkopfs des Spindelstocks gedreht werden kann. Jedes karussellartige Werkzeugmagazin weist einen Transportschieber auf, der auf einem Durchmesser des von dem karussellförmigen Magazin definierten Umfangskreises angeordnet ist und mit dem Werkzeuge in einer radialen Richtung aus der Übergabeposition des Werkzeugmagazins in eine Spindelposition bzw. umgekehrt verfahren werden können. Zum Werkzeugwechsel wird einer dieser Transportschieber vorgefahren, um das alte Werkzeug aus der Spindel zu entnehmen und nachfolgend wird der jeweils andere Schieber vorgefahren, um das neue Werkzeug in die Spindel einzusetzen. Zum Einziehen der Werkzeuge in die Aufnahme des Spindelkopfes muß dieser in der Höhe verfahren werden. Wenn das neue Werkzeug in die Aufnahme des Spindelkopfs eingesetzt worden ist, fährt dieser ein kurzes Stück nach unten, bis das neue Werkzeug in Eingriff mit dem Werkstück gelangt.

Die bekannte Werkzeugmaschine hat damit einige wesentliche Nachteile. Zum einen ist von Nachteil, daß durch die beiden karussellartigen Magazine in unmittelbarer Nähe des Spindelkopfes ein erheblicher Raumbedarf dort besteht, wo gerade genügend Arbeitsraum zur Verfügung stehen sollte, um auch große und sperrige Werkstücke bearbeiten zu können. Zum anderen hat die Konfiguration der bekannten Werkzeugmaschine zur Folge, daß sich alle in den beiden karussellartigen Magazinen enthaltenen Werkzeuge in unmittelbarer Nähe der Bearbeitungsposition befinden, so daß sich herumspritzende Bohrflüssigkeiten, vor allem aber auch herumfliegende Bohrspäne, auf den Werkzeugen absetzen können. Es ist daher durchaus möglich, daß sich auf einem Kegel eines Werkzeughalters zunächst Bohrwasser absetzt und dann kleine Bohrspäne kleben bleiben und dies kann wiederum zu Beschädigungen führen, wenn dieses Werkzeug zu einem späteren Zeitpunkt in den Aufnahmekonus des Spindelkopfes eingesetzt wird, weil die einander gegenüberliegenden Kegelflächen der Werkzeugaufnahme hochpräzise gearbeitet sind.

Ein weiterer wesentlicher Nachteil der bekannten Werkzeugmaschine liegt darin, daß die damit erstrebten Vorteile eines schnellen Werkzeugwechsels durch wechselweises Austauschen aus den beiden Magazinen die Reihenfolge der Bearbeitungsschritte einschränken. Wenn beispielsweise ein Werkzeug A nur in einem der beiden Magazine vorhanden ist, ist eine Bearbeitungsfolge-A-B-C-A nicht möglich, weil infolge des alternativen Einwechselns aus beiden Magazinen dasselbe Werkzeug nur in einem Abstand von Arbeitsschritten eingesetzt werden kann, der zwei oder ein geradzahliges Vielfaches davon beträgt. Will man hingegen die oben erläuterte Bearbeitungsfolge einstellen, ist es erforderlich, das gleiche Werkzeug A in beiden Magazinen vorrätig zu halten, wodurch im Extremfall der mit der bekannten Werkzeugmaschine und deren zwei wahlfreien Werkzeugmagazinen erreichbarer Vorteil vollkommen verloren geht.

Schließlich ist bei der bekannten Werkzeugmaschine noch von Nachteil, daß durch die eindimensionale Bewegung der Transportschieber die Spindel zum Werkzeugwechsel in senkrechter Richtung verfahren werden muß, was eine Verlängerung der Werkzeugwechselzeiten zur Folge hat.

Aus der US-A-4 182 021 ist noch ein Werkzeugmagazin bekannt, bei dem ein endloser Kettenförderer auf einer näherungsweise U-förmigen Bahn die Werkzeuge fördert, die an einer Übergabeposition zu einem Wechselgreifer ergriffen und einer Spindel einer Werkzeugmaschine zugeführt werden. Allerdings ist bei diesem bekannten Magazin in keiner Weise die besondere geometrische Form der Endlosbahn ausgenutzt und durch die Übernahme von Werkzeugen an nur einer einzigen Position ist die Form der Endlosbahn bei diesem bekannten Werkzeugmagazin völlig ohne Bedeutung.

Aus der DE-A-21 63 499 ist eine Werkzeugmaschine mit automatischer Werkzeug-Wechselvorrichtung bekannt, bei der ebenfalls zu beiden Seiten einer Spindel karussellartige Werkzeugmagazine vorgesehen sind, deren Drehachse jedoch senkrecht zur Spindelachse steht. Zum Einwechseln der Werkzeughalter sind zwei Greifarme vorgesehen, die die Werkzeuge beim Verfahren von der Magazinstellung in die Spindelstellung bzw. umgekehrt um 90° drehen, so daß bei dieser bekannten Werkzeugmaschine relativ aufwendige Greifelemente an den Wechselarmen erforderlich sind, um zu verhindern, daß die Werkzeughalter beim Wechsel nicht aus den Greifelementen herausfallen.

Aus der DE-A-17 52 605 ist eine Werkzeugwechselvorrichtung für Werkzeugmaschinen bekannt, bei der hinter einem Spindelstock mit senkrechter Spindelachse im Abstand ein Werkzeugmagazin angeordnet ist. Das Werkzeugmagazin weist in einer horizontalen Ebene eine ovalförmige Endlosbahn mit Kettenförderung auf. An der Kette sind gabelartige Halter angelenkt, in die die mit Werkzeugen bestückten Werkzeughalter eingesetzt sind. Zwischen dem Spindelstock und dem davon beabstandeten Werkzeugmagazin befindet sich eine horizontal verlaufende Transportbahn, entlang der ein nach unten gekrümmt verlaufender Greifarm verfahrbar ist. Der Greifarm fährt zum Entnehmen eines Werkzeuges aus dem Magazin nach hinten in den Bereich des Werkzeugmagazins und übernimmt an einer Entnahmeposition einen Werkzeughalter. Mit diesem Werkzeughalter fährt der gesamte Greifarm entlang der Transportbahn nach vorne, bis er in eine Spindelposition gelangt und dort den Werkzeughalter in die Spindel einsetzt.

Die Werkzeugwechselvorrichtung gemäß DE-A-17 52 605 hat den Nachteil eines beträchtlichen Raumbedarfes, weil hinter der eigentlichen Werkzeugmaschine ein großer Raum für die Transporteinrichtung und das getrennt stehende Magazin erforderlich ist. Außerdem ergeben sich durch den relativ langen Fahrweg des Greifarmes vom Magazin zum Spindelstock verhältnismäßig lange Umrüstzeiten, insbesondere auch deswegen, weil nur ein einziger Greifarm vorgesehen ist, der zunächst das alte Werkzeug aus der Spindelposition entnehmen, in das Magazin transportieren, dort nach Weiterschalten des Magazins das neue Werkzeug entnehmen, vorfahren und in die Spindel einsetzen muß.

Aus der DE-A-33 20 851 ist eine Werkzeugmaschine bekannt, bei der um einen Spindelstock mit senkrechter Spindelachse herum eine Vielzahl von Greifarmen karussellartig angeordnet ist. Jeder Greifarm ist mit einem bestimmten Werkzeughalter/Werkzeug bestückt. Die Greifarme weisen ein parallelogrammartiges Gestänge auf, mit dem die Werkzeughalter aus einer von der Spindelachse radial beabstandeten Magazinposition in eine Spindelposition verfahren werden können. Außerdem sind alle Greifarme gemeinsam an einer Hülse angeordnet, die den Spindelstock umfaßt und auf diesem in der Höhe verschiebbar ist.

Zwar sind bei der Werkzeugmaschine gemäß DE-A-33 20 851 die Werkzeugwechselzeiten erheblich kürzer, weil sämtliche Werkzeughalter sich in unmittelbarer Nähe der Spindel, nämlich karussellartig um diese herum, befinden, der konstruktive Aufwand ist jedoch beträchtlich, weil für jeden Werkzeughalter ein eigener Greifarm mit Betätigungsmechanik vorgesehen sein muß. Außerdem ist durch diese Art der Magazinierung der Anzahl der Werkzeuge eine bestimmte Grenze gesetzt, so daß nur eine ebenfalls begrenzte Zahl von Bearbeitungsschritten ohne Umrüsten der Werkzeuge im Magazin ausgeführt werden kann.

In der europäischen Patentanmeldung EP-A-0157 950 (Stand der Technik gemäß Art. 54(3) EPÜ) ist eine Werkzeugmaschine mit einem in mehreren Achen beweglichen Spindelstock beschrieben, bei der ein Werkzeugmagazin ebenfalls im Abstand hinter dem Spindelstock in einer horizontalen Ebene angeordnet ist, wobei an beiden Seiten des Spindelstocks je eine Transporteinrichtung vorgesehen ist, mit der Werkzeughalter vom Magazin in den Bereich des Spindelstocks gefördert werden können. An der Vorderseite des Spindelstocks sind zwei pendelartige Greifarme mit horizontaler Schwenkachse vorgesehen. So kann beispielsweise der linke Greifarm einen Werkzeughalter aus der Spindelposition entnehmen und der linken Transporteinrichtung zuführen, während simmultan der rechte Greifarm aus der rechten Transportvorrichtung das nächste Werkzeug entnimmt und in die Spindelposition einsetzt.

Der Erfindung liegt demgegenüber die Aufgabe zugrunde, eine Werkzeugmaschine der eingangs genannten Art dahingehend weiterzubilden, daß eine noch größere Anzahl unterschiedlicher Werkzeuge wahlfrei und bei minimalen Umrüstzeiten eingewechselt werden kann, ohne daß dies den frei verfügbaren Arbeitsraum in der Nähe des Spindelkopfs einschränkt.

Diese Aufgabe wird erfindungsgemäß dadurch gelöst, daß die Endlosbahn U-förmig verläuft, daß sich an beiden Enden der Schenkel des U eine Entnahme- bzw. Bestückungsposition befindet und daß der Spindelkopf vor und unterhalb dieser Enden angeordnet und mit dem Werkzeugmagazin in Richtung der Achse starr verbunden ist.

Die der Erfindung zugrunde liegende Aufgabe wird damit vollkommen gelöst.

Die Gestaltung des Magazins in Form eines U bzw. eines Hufeisens hat nämlich den Vorteil, daß durch geeignete Dimensionierung der Länge der Schenkel des U eine sehr große Zahl von Werkzeughaltern im Magazin gespeichert werden kann, wobei weiter zu berücksichtigen ist, daß die Endlosbahn die Form des U einmal innen und einmal außen durchläuft. Es können somit typischerweise 32 oder auch wesentlich mehr Werkzeuge im Magazin gespeichert werden, ohne daß hierdurch die seitliche Ausladung neben dem Spindelstock und damit auch die Ausladung nach vorne zu groß wird, wie dies bei den beiden seitlichen karussellartigen Werkzeugmagazinen nach dem Stand der Technik der Fall ist. Die räumliche Nähe der Entnahme- bzw. Bestückungsposition zum Spindelstock ist dabei so gewählt, daß einerseits eine minimale Werkzeugwechselzeit möglich ist, weil die geringe räumliche Entfernung eines Greifarmes überbrückt werden kann, andererseits ist aber die Beabstandung des Werkzeugmagazins nach hinten und oben gegenüber dem Spindelkopf so groß, daß eine Verschmutzung der Werkzeuge, insbesondere der Konusse der Werkzeughalter nicht befürchtet werden muß, die sich oberhalb der Werkzeuge befinden und somit für herumspritzendes Bohrwasser und herumfliegende Bohrspäne kaum zugänglich sind.

Die "Anzapfung" des U-förmigen Werkzeugmagazins an zwei Positionen hat den Vorteil, daß durch geeignete Steuerung des Transports der Werkzeughalter entlang der Endlosbahn die Werkzeugwechselzeit nochmals deutlich verkürzt werden kann. Kurz vor Ende eines Bearbeitungsvorganges kann nämlich bereits das Werkzeugmagazin so umlaufen, daß an einer der beiden Positionen, die nun als Entnahmeposition dient, das nächste benötigte Werkzeug zur Verfügung gestellt und von einem der beiden Greifarme entnommen werden kann. Unmittelbar daran schließt sich ein Suchlauf des Magazins an, der einen Freiplatz für den nunmehr aus der Spindel zu entnehmenden Werkstückhalter an der anderen Position zur Verfügung stellt, die jetzt als Bestückungsposition dient. Der andere Greifarm kann nun den "alten" Werkzeughalter aus der Spindel entnehmen und in die Leerposition einsetzen, während der andere Greifarm bereits den "neuen" Werkzeughalter in die Spindel einsetzt.

Schließlich hat die Maßnahme, das Werkzeugmagazin mit dem Spindelkopf in Richtung der Spindelachse starr zu verbinden, den Vorteil, daß eine sogenannte "variable Wechselebene" realisiert werden kann, das heißt, daß der Werkzeugwechselvorgang prinzipiell unabhängig davon ist, in welcher Koordinatenposition sich der Spindelkopf im Augenblick des Werkzeugwechsels befindet, weil das Magazin infolge der starren Verbindung allen Bewegungen des Spindelstocks folgt. Der Transport zwischen Spindel und Magazinpositionen kann daher unabhängig von der jeweiligen Koordinatenposition des Spindelkopfs erfolgen und die Wege lassen sich daher unabhängig von der Koordinatenposition optimieren, insbesondere verkürzen.

Bei einer bevorzugten Ausgestaltung der Erfindung sind die Achse des Spindelstocks und die Entnahme- bzw. Bestückungspositionen symmetrisch an den Enden eines gleichschenkligen Dreiecks angeordnet und der Transportweg der Greifarme verläuft in Richtung der gleichen Dreieckseiten, wobei die Winkellage der Werkzeughalter während des Transportierens unverändert bleibt.

Diese Maßnahme hat den Vorteil, daß die Symmetrie der Anordnung die Transportwege zwischen der Spindel einerseits und den beiden Positionen des Werkzeugmagazins andererseits gleich lang sind, so daß sich auch gleiche Transportzeiten ergeben. Durch den winkelfesten Transport der Werkzeughalter ist ferner gewährleistet, daß die Mitnahmenut am Werkzeughalter stets in einer definierten Position ist, so daß das Einsetzen des Werkzeughalters in die Spindel die Mitnahmenut stets unmittelbar in Eingriff mit dem dort vorhandenen Nutenstein kommt.

Bei einer weiteren Ausgestaltung der Erfindung, bei der der Spindelstock ebenfalls entlang mehrerer Koordinatenachsen verfahrbar ist, weisen die Greifarme ein parallelogrammartiges Gestänge auf und sind in Richtungen senkrecht zur Achse des Spindelstocks mit diesem starr verbunden, in einer Richtung parallel zur Achse jedoch verschiebbar.

Diese Maßnahme hat den Vorteil, daß mit lediglich einem einzigen Betätigungsorgan, beispielsweise einer Kolben-Zylinder-Einheit ein Einfahren der Werkzeughalter in die Spindel bewerkstelligt werden kann, indem der bestückende Greifarm den Werkzeughalter in einer Position kurz unterhalb der Spindel hält und die Greifarme dann insgesamt nach oben verfahren werden, bis der Werkzeughalter in der Aufnahme des Spindelstocks einrastet. Besonders bevorzugt ist, die Greifarme insgesamt mittels einer Zugfeder in dieser oberen Position zu halten und lediglich zum Ausspannen der Werkzeughalter die Greifarme gemeinsam mittels einer Kolben-Zylinder-Einheit nach unten gegen die Kraft der Zugfeder zu verfahren.

Bei Ausführungsformen der Erfindung ist eine Transportkette entlang der Endlosbahn geführt, an der Halter für die Werkzeughalter angelenkt sind und zwei synchron angetriebene Antriebsräder sind für die Transportkette an den Enden des U angeordnet.

Diese Maßnahme hat den Vorteil, daß der Transport der Werkzeughalter vollkommen spielfrei erfolgt, weil durch den synchronen Antrieb an zwei Punkten der Endlosbahn, an denen die Entnahme bzw. das Bestücken erfolgt, ein Spiel durch eventuelles Längen der Kette ausgeschlossen ist. Die Werkzeuge stehen daher an den Entnahmestellen exakt in der richtigen Position, die vorzugsweise durch einen inkrementierenden Sensor an einer Kettenwelle ermittelt wurde.

Bei einer besonders bevorzugten Variante dieses Ausführungsbeispiels werden die Antriebsräder mittels eines V-förmig verlaufenden endlosen Riemens, vorzugsweise eines Zahnriemens oder einer Kette, angetrieben werden, wobei sich die Antriebsräder an den freien Enden der Schenkel des V und ein Treibrad sowie eine davon beabstandete Rolle sich an deren Schnittpunkt befinden.

Diese Maßnahme hat den Vorteil, daß der gewünschte Synchronlauf der beiden Antriebsräder auf besonders einfache Weise mit nur einem Antriebsmotor gewährleistet werden kann.

Bei einer bevorzugten Weiterbildung dieser Variante ist die Rolle als in Richtung zum Treibrad verschiebbare Spannrolle für den Riemen bzw. die Kette ausgebildet.

Diese Maßnahme hat den Vorteil, daß auf besonders einfache Weise die Riemen- bzw. Kettenspannung nachgestellt werden kann, sofern dies erforderlich werden sollte.

Bei einer weiteren Ausbildung der zuletzt genannten Varianten befinden sich die Antriebsräder, das Treibrad, die Rolle sowie der Riemen in einem V-förmigen Antriebskasten.

Diese Maßnahme hat den Vorteil, daß der Antriebsriemen, bzw. die Kette geschützt innerhalb des durch den Antriebskasten gebildeten Hohlkörpers verlaufen.

Eine besonders gute Wirkung wird bei diesem Ausführungsbeispiel dadurch erzielt, daß der Antriebskasten mit seinen freien Schenkeln das Magazin an dessen freien Schenkeln trägt und mit der Spitze des V am Spindelstock befestigt ist, wobei Antriebskasten und Magazin vorzugsweise als selbsttragende Aluminium-Konstruktion ausgebildet sind.

Diese Maßnahme hat den besonderen Vorteil, daß eine besonders leichte Bauart möglich ist, was von besonderer Wichtigkeit beim Verfahren des Spindelstocks in mehreren Koordinatenrichtungen ist, weil der Spindelstock das Magazin und die Antriebsvorrichtung "mitschleppen" muß.

Bei weiteren Ausführungsbeispielen der Erfindung werden die Werkzeughalter auf der U-förmigen Endlosbahn des Magazins in gabelartigen Haltern gehalten, deren offene Seite vom U weg zeigt, es verläuft eine magazinfeste Führung, vorzugsweise eine Wand des Magazins, entlang der Endlosbahn vor der offenen Seite und die Führung weist an den Entnahme- bzw. Bestückungspositionen jeweils eine Öffnung auf.

Diese Maßnahme hat den Vorteil, daß die Entnahme bzw. das Bestücken von Werkzeughaltern besonders einfach erfolgen kann, weil aufgrund der schubladenartigen Funktion der gabelartigen Halter die Werkzeughalter einfach von vorne eingeschoben bzw. nach vorne herausgenommen werden können. Aufgrund der magazinfesten Führung ist ausgeschlossen, daß die Werkzeughalter unter Einfluß der Fliehkraft bei hoher Durchlaufgeschwindigkeit durch die Kurven des U aus den gabelartigen Haltern herausgleiten. Lediglich an den Positionen zur Entnahme und zum Bestücken sind Öffnungen vorgesehen, um diese Arbeitsgänge zu ermöglichen.

Besonders bevorzugt bei diesem Ausführungsbeispiel ist, wenn die Öffnung von einem bogenförmigen Abschnitt überspannt wird, der das obere Ende eines an seinem unteren Ende schwenkbaren sensenförmigen Halteteiles bildet.

Diese Maßnahme hat zunächst den Vorteil, daß die Öffnung an einer Entnahmeposition sofort wieder geschlossen werden und sich ein Suchlauf des Magazins anschließen kann, der in der bereits oben geschilderten Weise zum Auffinden eines Leerplatzes für den aus der Spindel zu entnehmenden Werkzeughalter dient. Die Gestaltung des Halteteiles in Sensenform mit einer Drehachse am unteren Ende hat den Vorteil, daß der obere, bogenförmige Abschnitt bei genügend langer Ausbildung des unteren Endes praktisch tangential von der Entnahme- bzw. Bestückungsposition weggeschwenkt werden kann. Dies hat den Vorteil, daß ein Halter des Greifarmes sich bereits unmittelbar vor der Entnahme- bzw. Bestückungsposition befinden kann, ohne daß die Gefahr einer Kollision mit dem wegschwenkenden bogenförmigen Abschnitt besteht.

Bei Ausgestaltungen der Erfindung ist eine magazinfeste Schieberanordnung senkrecht zur Endlosbahn an den Entnahme- bzw. Bestückungspositionen angeordnet, mit der Werkzeughalter aus einseitig offenen, gabelartigen Haltern des Magazins in einen bzw. aus einem ebenfalls gabelartigen Halter des in Magazinstellung befindlichen Greifarmes verschiebbar sind.

Diese relativ schnell zu betätigende Schieberanordnung hat den Vorteil, daß die Übergabe des Werkzeughalters vom Magazin in den Greifarm oder umgekehrt schnell erfolgt, so daß hierdurch die Werkzeugwechselzeiten kurz gehalten werden können.

Dies gilt insbesondere dann, wenn in erfinderischer Weiterbildung dieser Variante die Schieberanordnung einen Kopf aufweist, der mit zwei in Verschieberichtung hintereinander angeordneten Abschnitten versehen ist, die den zu verschiebenden Werkzeughalter in beiden Verschieberichtungen formschlüssig halten.

Wenn diese Abschnitte nämlich, in Durchlaufrichtung des Magazins gesehen, der Kontur des Werkzeughalters, zuzüglich etwas Spiel, entsprechen, kann der Kopf während des Durchlaufes des Magazins im Durchlaufweg der Werkzeughalter verbleiben, so daß er bei einem Übergabevorgang nicht zunächst gesondert in diese Position ausgefahren werden muß. Außerdem hat diese Gestaltung des Kopfes den Vorteil, daß Übergabevorgänge in beiden Richtungen, nämlich in das Magazin und aus dem Magazin vorgenommen werden können. Entspricht in der beschriebenen Weise die Kontur der Abschnitte der Außenkontur des Werkzeughalters, der bekanntlich an seinem oberen Ende konisch ausgebildet ist, so kann die Schieberanordnung mit aus dem Magazin ausgefahrenen Kopf dort eine Wartestellung einnehmen, in der der Greifarm den Werkzeughalter von unten herantransportiert, so daß der in das Magazin einzuführende Werkzeughalter von unten, ohne anzustoßen, zwischen die Abschnitte des Kopfes der Schieberanordnung gelangt.

Bei einer Weiterbildung dieser Variante ist der vom Greifarm weg weisende Abschnitt des Kopfes um eine zur Verschieberichtung parallele Achse verschwenkbar.

Diese Maßnahme hat den Vorteil, daß bei aus dem Magazin ausgefahrenem Kopf bei gleichzeitigem Wegschwenken des hinteren Abschnittes das Magazin von Hand bestückt oder entleert werden kann, weil dann der Zugang zu den gabelartigen Aufnahmen des Magazins frei ist.

Schließlich ist noch eine Ausführungsform der Erfindung bevorzugt, bei der das Magazin von einer Wand umgeben ist, die mit Ausnahme von Öffnungen an den Entnahme- und Bestückungspositionen allseitig geschlossen ist.

Diese Maßnahme hat den Vorteil, daß die im Magazin befindlichen Werkzeuge und Werkzeughalter vollkommen von Spänen und Kühlmittelspritzern geschützt sind, ebenso wie die im Magazin angeordneten Transport- und Antriebseinheiten.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:

Fig. 1 ein Ausführungsbeispiel einer erfindungsgemäßen Werkzeugmaschine in Vorderansicht;

Fig. 2 Die Maschine gemäß Fig. 1 in Draufsicht, teilweise abgebrochen, teilweise aufgebrochen und teilweise in vereinfachter Darstellung;

Fig. 3 in Draufsicht eine schematische Darstellung des Antriebssystems für ein erfindungsgemäßes Magazin;

Fig. 4 eine Schnittdarstellung entlang der Linie IV-IV von Fig. 3;

Fig. 5 und 6 zwei schematische Darstellungen von Arbeitsstellungen eines erfindungsgemäß verwendeten Magazins

Fig. 7 eine Schnittdarstellung entlang der Linie VII-VII von Fig. 5, in vergrößerter Darstellung zur Erläuterung des Übergabevorganges Magazin/Greifarm;

Fig. 8 eine Darstellung wie Fig. 7, zur Erläuterung des manuellen Bestückens eines erfindungsgemäßen Magazins.

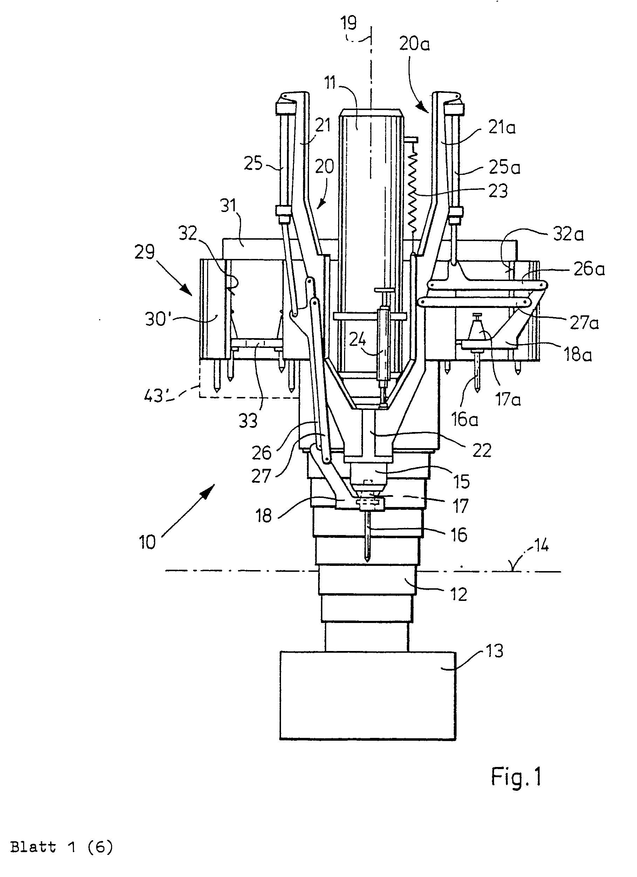

In Fig. 1 ist 10 gesamthaft eine Werkzeugmaschine mit einem Spindelstock 11, der auf einer teleskopartig abgedeckten Höhenverstellung 12 auf einem Sockel 13 angeordnet ist. Der Spindelstock 11 ist weiterhin in zwei Koordinatenrichtungen senkrecht zu seiner Hochachse 19 verfahrbar, die hierfür erforderlichen Einheiten sind jedoch an sich bekannt und der Übersichtlichkeit halber in den Figuren nicht dargestellt.

In einen Spindelkopf 15 ist ein Werkzeug 16, das von einem Werkzeughalter 17 gehalten wird, eingesetzt. Der Werkzeughalter 17 wird seinerseits von einem Halter 18 eines Greifarmes 20 gehalten. Der Werkzeughalter 17 kann dabei beispielsweise so ausgebildet sein, daß er im Halter 18 rotieren kann, so daß der Halter 18 in der Arbeitsstellung des Werkzeughalters 17 während der Benutzung des Werkzeuges 16 am Werkzeughalter 17 verbleiben kann.

Der Greifarm 20 weist ein starres Teil 21 auf, das unten an einer Hülse 22 befestigt ist, die auf dem Spindelkopf 15 in Richtung der Hochachse 19 verschiebbar ist. An der Hülse 22 ist ferner ein weiteres starres Teil 21a eines weiteren Greifarmes 20a befestigt.

Mittels einer Zugfeder 23, die an einem der starren Teile 21, 21a und ferner am Spindelstock 11 angreift, wird die aus den Greifarmen 20, 20a und der Hülse 22 bestehende Einheit in der Ruhestellung nach oben in die in Fig. 1 dargestellte Arbeitsposition eines Werkzeughaltes 17 gezogen. Zum Werkzeugwechsel wird eine erste Kolben-Zylinder-Einheit 24 betätigt, deren oberes Ende mit dem Spindelstock 11 und deren unteres Ende mit der Hülse 22 oder einem der starren Teile 21, 21a verbunden ist. Die erste Kolben-Zylinder-Einheit 24 drückt die Hülse 22 nach unten, so daß der Werkzeughalter 17 außer Eingriff mit dem Spindelkopf 15 kommt.

Die Halter 18 bzw. 18a der Greifarme 20 bzw. 20a sind über ein parallelogrammartiges Gestänge 26, 27 bzw. 26a, 27a mit den starren Teilen 21 bzw. 21a verbunden. Die Gestänge 26, 27 bzw. 26a, 27a werden mittels zweiter Kolben-Zylinder-Einheiten 25 bzw. 25a betätigt, deren eines Ende am starren Teil 21 bzw. 21a und deren anderes Ende an einer der Stangen 26 bzw. 26a angreift.

Während bei ausgefahrener zweiter Kolben-Zylinder-Einheit 25, wie in der linken Hälfte von Fig. 1 dargestellt, der Greifarm 20 den Werkzeughalter 17 in die Spindelposition bringt, gelangt der Werkzeughalter 17a bei eingefahrener zweiter Kolben-Zylinder-Einheit 25a in eine sogenannte Magazinposition oberhalb des Spindelkopfes 15.

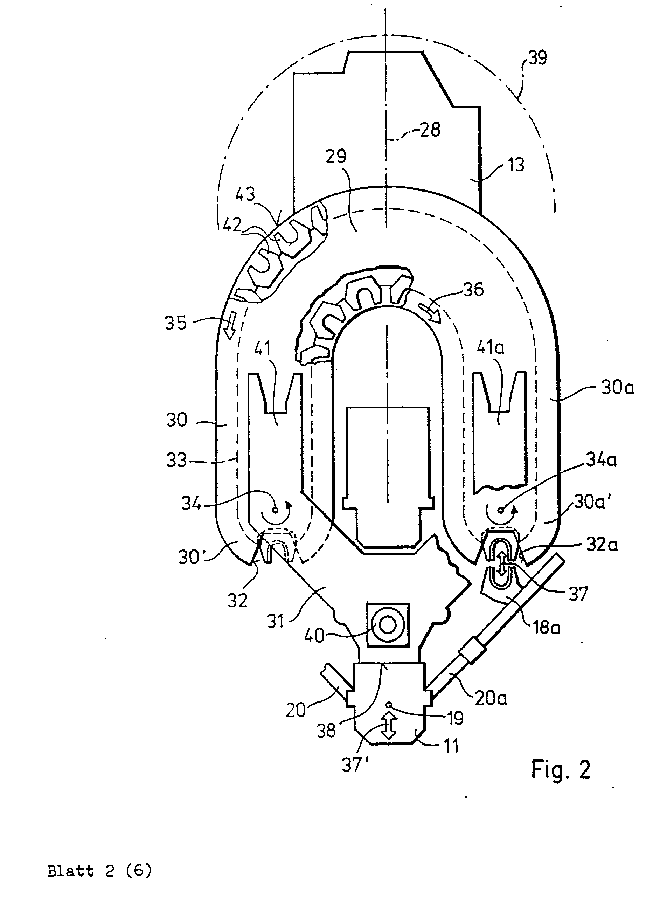

Wie man deutlich aus der Draufsicht gemäß Fig. 2 erkennt, sind die Greifarme 20, 20a jeweils um etwa 45° nach hinten angestellt, so daß sie zueinander einen Winkel von etwa 90° bilden. Beim Aus- bzw. Einfahren der zweiten Kolben-Zylinder-Einheiten 25 bzw. 25a aus der Spindelposition in die Magazinposition oder umgekehrt durchlaufen daher die Werkzeughalter 17 bzw. 17a einen Transportweg von "hinten oben" nach "vorne unten" bzw. umgekehrt. Durch die Verwendung des parallelogrammartigen Gestänges 26, 27 bzw. 26a, 27a wird dabei jedoch die vertikale Ausrichtung der Werkzeughalter 17 bzw. 17a beibehalten, ebenso wie deren Drehlage um ihre Hochachse.

Aus Fig. 2 erkennt man ferner, daß symmetrisch zu einer Achse 28, die senkrecht zur Hochachse 19 des Spindelstocks 11 verläuft, ein Magazin 29 angeordnet ist, das in der Draufsicht gemäß Fig. 2 die Form eines U bzw. eines Hufeisens aufweist. Die Schenkel des Magazins 29 sind mit 30 bzw. 30a und deren Enden mit 30' bzw. 30a' bezeichnet.

Auf dem Magazin 29 und mit diesem fest verbunden befindet sich ein V-förmiger Antriebskasten 31, der in einer Verbindungsebene 28 mit dem Spindelstock 11 und mit seinen Schenkeln 41, 41a mit dem Magazin 29 verbunden ist. Der Antriebskasten 31 und das Magazin 29 bilden bevorzugt eine selbsttragende Aluminium-Konstruktion, die als Kragarm starr in der Verbindungsebene 38 mit dem Spindelstock 11 verbunden ist und daher sämtlichen Bewegungen des Spindelstocks 11 in den drei Koordinatenachsen folgt. Durch einen Umriß 39 ist als Beispiel dargestellt, in welcher Position sich das Magazin 29 befindet, wenn der Spindelstock 11 in seiner hinteren Extremlage ist.

An den Enden 30', 30a' des Magazins 29 befinden sich Öffnungen 32, 32a, über die Werkzeughalter 17, 17a aus dem Magazin 29 entnehmbar bzw. in dieses einsetzbar sind.

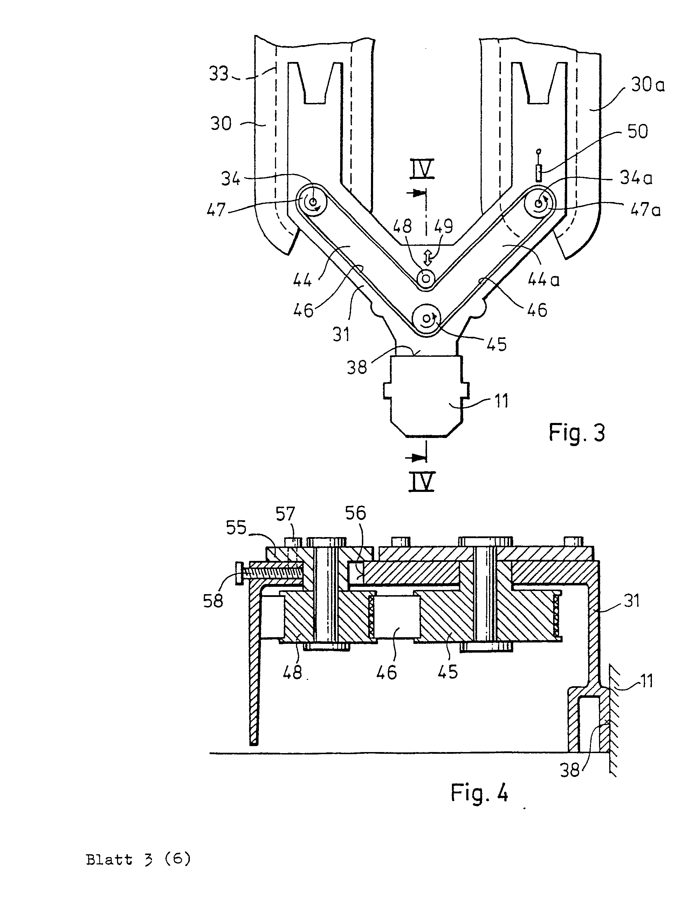

Im Magazin 29 verläuft eine ebenfalls U-förmig verlaufende Endlosbahn in Gestalt einer endlosen Transportkette 33, die über Antriebsachsen 34 bzw. 34a an den Enden 30' bzw. 30a' angetrieben wird, wie dies zu den Fig. 3 und 4 nachstehend noch erläutert wird.

Bei Drehung der Antriebsachsen 34 bzw. 34a in der eingezeichneten Drehrichtung bewegen sich gabelartig ausgebildete Halter 42 in Richtung von pfeilen 35, 36 entlang der durch die Transportkette 33 definierten Endlosbahn. Bei Umschaltung der Drehrichtung ändert sich naturgemäß auch die Richtung der Pfeile 35, 36.

In die gabelartig ausgebildeten Halter 42 können Werkzeughalter 17, 17a von vorne schubladenartig eingesetzt werden.

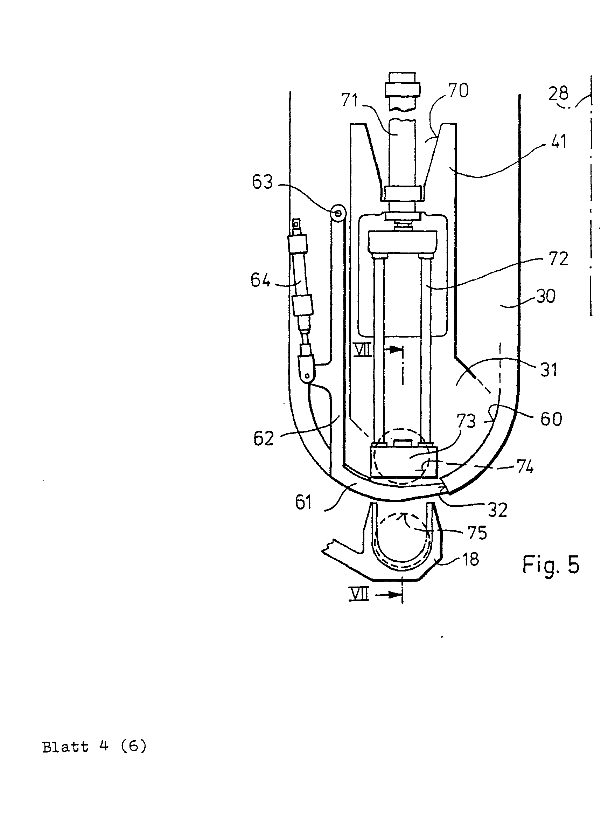

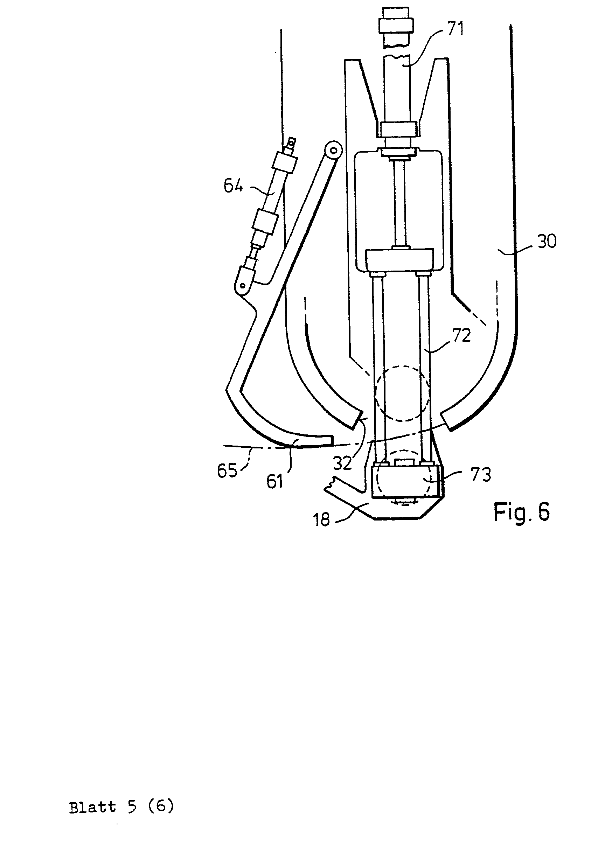

Damit bei hoher Geschwindigkeit der Transportkette 33 die Werkstückhalter 17, 17a nicht in den Kurven durch Fliehkraft aus den Haltern 42 herausgeschleudert werden, ist eine Führung in Gestalt einer Wand 43 des Magazins 29 vorgesehen, die vor der Gabelöffnung der Halter 42 verläuft. Lediglich im Bereich der Öffnungen 32 bzw. 32a ist diese Führung unterbrochen, wie weiter unten zu den Fig. 5 und 6 noch näher erläutert werden wird.

In Fig. 1 kann man erkennen, daß bei 43' die Wand 43 so weit nach unten fortgesetzt und seitlich verlaufend ausgebildet sein kann, daß das Magazin 29 eine bis auf die Öffnungen 32 bzw. 32a geschlossene Form aufweist. Hierdurch werden die in der Darstellung gemäß Fig. 1 nach unten aus dem Magazin 29 vorstehenden Werkzeuge 16, 16a vor herumfliegenden Spänen und herumspritzendem Kühlmittel geschützt, ebenso wie die Transportkette 33 mit den zugehörigen Antriebseinheiten.

In Fig. 2 ist hinter dem Spindelstock 11 ein Antriebsmotor 40 zu erkennen, der ein in Fig. 3 mit 45 bezeichnetes Treibrad antreibt. Das Treibrad 45 befindet sich an der unteren Spitze eines ebenfalls V-förmig verlaufenden endlosen Zahnriemens 46, der an den Enden der Schenkel des V Antriebsräder 47 bzw. 47a antreibt, die drehstarr mit den Antriebsachsen 34 bzw. 34a verbunden sind. In der Spitze des oberen Trums in der Darstellung gemäß Fig. 3 ist eine Spannrolle 48 zu erkennen, die in Richtung eines Pfeiles 49 verschiebbar ist.

Fig. 4 zeigt in einer Schnittdarstellung zum einen die zumindest nach oben geschlossene Ausbildung des Antriebskastens 31, der jedoch, abgesehen von den erforderlichen Durchtritten der Antriebsachsen 34 und 34a auch nach unten geschlossen ausgebildet sein kann. Die Spannrolle 48 wird von einem Justierteil 55 gehalten, das in einem Langloch 56 in Richtung des Pfeiles 49 von Fig. 3 verschiebbar ist. Zur Lagefeststellung bzw. -einstellung dienen eine Fixierschraube 57 sowie eine Justierschraube 58. Hierdurch kann die Spannung im Zahnriemen 46, der selbstverständlich auch eine Kette oder dergleichen sein kann, im erforderlichen Umfang eingestellt werden.

In Fig. 3 erkennt man am Antriebsrad 47a einen Sensor 50, der als inkrementierender Sensor die jeweilige Drehlage des Antriebsrades 47a erkennt und daraus die Position der Werkzeughalter 17, 17a in den Haltern 42 der Transportkette 33 erkennen kann. Durch eine in den Figuren nicht näher dargestellte Steuereinrichtung kann demzufolge die Position der Werkzeughalter 17, 17a in jedem Augenblick erkannt und es kann eine gewünschte Position durch geeigneten Suchlauf angesteuert werden.

In den Fig. 5 und 6 ist der Vorgang bei der Übergabe von Werkzeughaltern 17, 17a von Haltern 42 im Magazin 29 zum Halter 18 der Greifarme 20, 20a veranschaulicht.

In Fig. 5 ist mit 60 eine äußere Bewegungsbahn angedeutet, d.h. die Ortskurve, an der sich die Außenkontur der Werkzeughalter 17, 17a entlangbewegt, wenn sich die Transportkette 32 bewegt.

Die Bewegungsbahn 60 wird, wie bereits zu Fig. 2 erläutert, von einer Führung begrenzt, um ein Auswandern der Werkzeughalter 17, 17a aus den Haltern 42 des Magazins 29 zu verhindern. Die in der Bewegungsbahn 60 angeordnete Führung endet an der Öffnung 32. Dort ist ein bogenförmiger Abschnitt 61 eines sensenförmigen Halteteils 62 vorgesehen, das um eine Achse 63 drehbar ist. Zur Drehung des Halteteils 62 um die Achse 63 dient eine dritte Kolben-Zylinder-Einheit 64.

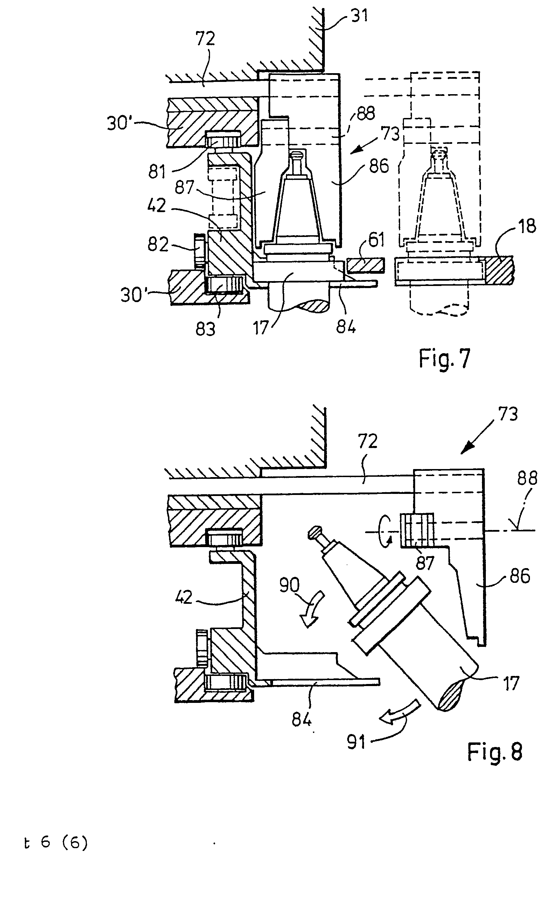

Der Antriebskasten 31 ist am Ende seiner freien Schenkel 41, 41a mit einer V-förmigen Aussparung 70 versehen, an deren Grund eine vierte Kolben-Zylinder-Einheit 71 starr angeordnet ist. Die Einheit 71 verschiebt ein Gestänge 72 in einer Richtung parallel zur Achse 28, das an seinem vorderen Ende einen Kopf 73 trägt. Der Kopf 73 dient zum Ergreifen von Werkzeughaltern 17, 17a, wie dies weiter unten zu Fig. 7 noch ausführlich erläutert wird. Der vom Kopf 73 ergriffene Werkzeughalter 17, 17a kann zwischen einer Magazinposition 74 und einer Greifarmposition 75 verschoben werden.

In der Arbeitsstellung gemäß Fig. 5 ist die dritte Kolben-Zylinder-Einheit 64 ausgefahren und der bogenförmige Abschnitt 61 befindet sich in Schließstellung, so daß für die äußere Bewegungsbahn 60 eine durchgehende seitliche Führung vorhanden ist. Der Kopf 73 befindet sich in der Durchlaufbahn der Werkzeughalter 17, 17a, wobei der Kopf 73 so gestaltet ist, daß er den Durchlauf der Werkzeughalter 17, 17a nicht behindert, wie dies ebenfalls noch zu Fig. 7 erläutert werden wird.

Der Halter 18 des Greifarms 20 befindet sich vor der Öffnung 32 in unmittelbarer Nähe des bogenförmigen Abschnittes 61.

Soll nun beispielsweise ein Werkzeughalter 17a aus der Magazinposition 74 in die Greifarmposition 75 überführt werden, werden Arbeitsvorgänge eingeleitet, die in Fig. 6 veranschaulicht sind.

Zunächst wird die dritte Kolben-Zylinder-Einheit 64 betätigt, d.h. eingezogen, so daß das sensenförmige Halteteil 62 verschwenkt wird. Der bogenförmige Abschnitt 61 wird aufgrund der großen Länge des Halteteils 62 auf einer nahezu tangential verlaufenden Bahn 65 aus der Öffnung 32 herraus verschwenkt, so daß er den unmittelbar vor ihm angeordneten Halter 18 nicht berührt. Auf diese Weise kann der Halter 18 mit extrem geringem Abstand vor den in Fig. 5 nicht dargestellten Haltern 42 des Magazins 29 angeordnet sein, so daß die Werkzeughalter 17, 17a nur über einen sehr geringen Zwischenraum geschoben werden müssen.

Sobald der bogenförmige Abschnitt 61 die Öffnung 32 freigegeben hat, kann die vierte Kolben-Zylinder-Einheit 71 betätigt, d.h. ausgefahren werden, so daß den Kopf 73 der Werkzeughalter 17, 17a aus der Magazinposition 74 in die Greifarmposition 75 überführt.

Unmittelbar nach Abschluß dieser Überführung wird der Kopf 73 wieder eingezogen und der bogenförmige Abschnitt 61 kehrt in seine in Fig. 5 gezeichnete Ausgangsstellung zurück, so daß unmittelbar danach die Transportkette 33 des Magazins 29 wieder anlaufen kann.

Fig. 7 zeigt die Verhältnisse beim Überführen des Werkzeughalters 17 nochmals im einzelnen.

Man erkennt in Fig. 7 zunächst, daß die Halter 42 des Magazins 29 beispielsweise mit drei Rollen 81, 82, 83 im Magazin 29 bzw. dessen Ende 30' überführt sind, wobei eine dieser Rollen 81 bis 83 als Drehgelenk in der Transportkette 33 ausgebildet sein kann.

Der Werkzeughalter 17 ruht in einer gabelförmigen Aufnahme 84 des Halters 42, die seitlich so abgesetzt ist, daß der Werkzeughalter 17 von vorne schubladenartig in die gabelförmige Aufnahme 84 eingeschoben und wieder herausgeschoben werden kann.

Der Kopf 73 weist einen vorderen, starren Abschnitt 86 und einen hinteren, um eine Achse 88 verschwenkbaren Abschnitt 87 auf, wobei die Achse 88 parallel zur Verschieberichtung des Kopfes 73 verläuft. Die Abschnitte 86, 87 sind innen der genormten Außenkontur des Konus des Werkzeughalters 17 angepaßt, wobei ein ausreichendes Spiel zur Kontur des Werkzeughalters 17 besteht.

Man erkennt aus der durchgezogen eingezeichneten eingefahrenen Stellung des Kopfes 73 in Fig. 7, daß der Kopf 73 in der Durchlaufbahn der Werkzeughalter 17 angeordnet sein kann, auch wenn die Werkzeughalter 17 mit der Transportkette 33 durchgefahren werden. Soll nun der Werkzeughalter 17, wie dies zuvor anhand der Fig. 5 und 6 veranschaulicht wurde, aus dem Magazin 29 in den Halter 18 des Greifarms 20 überführt werden, bewegt sich der Kopf 73 in die in Fig. 7 gestrichelt eingezeichnete Stellung, wobei der hintere Abschnitt 87 den Werkzeughalter 17 in den ebenfalls gabelförmigen Halter 18 des Greifarmes 20 schiebt. Der in Fig. 7 im Schnitt und durchgezogen eingezeichnete bogenförmige Abschnitt 61 ist in diesem Falle natürlich weggeschwenkt. Entsprechend kann der Werkzeughalter 17 auch von dem Halter 18 des Greifarmes 20 in den Halter 42 des Magazins 29 überführt werden und zwar, in dem der vordere Abschnitt 86 des Kopfes 73 den Werkzeughalter 17 in das Magazin 29 schiebt.

Wie bereits erwähnt wurde, ist der hintere Abschnitt 87 in einer Ebene senkrecht zur Verschieberichtung des Kopfes 73 verschwenkbar. In Fig. 8 ist dargestellt, daß hierdurch ein manuelles Bestücken des Magazins 29 möglich ist. Um nämlich das Magazin 29 zu entleeren bzw. einen neuen Satz Werkzeughalter für ein neues Bearbeitungsprogramm darin einzusetzen, wird der Kopf 73 in die in Fig. 8 eingezeichnete ausgefahrene Stellung gebracht, während gleichzeitig der zugehörige Greifarm 20 sich in Spindelstellung (linke Hälfte von Fig. 1), also entfernt, befindet und somit im Bereich der Öffnung 32 nicht stört. Da in dieser Position jedoch der hintere Abschnitt 87 ein Einsetzen bzw. Entnehmen der Werkzeughalter 17 behindern würde, kann er nun in Richtung des in Fig. 8 eingezeichneten Pfeiles um die Achse 88 verschwenkt werden, so daß nun genügend Freiraum besteht, um den Werkzeughalter 17 in Richtung der Pfeile 90, 91 in die gabelförmige Aufnahme 84 des Halters 42 einzusetzen.

## Patentansprüche

1. Werkzeugmaschine mit einem Spindelstock (11), mit mindestens einem Werkzeugmagazin (29), in dem eine Mehrzahl von mit Werkzeugen (16) bestückten Werkzeughaltern (17) entlang einer Endlosbahn in einer Ebene senkrecht zur Achse (19) des Spindelstocks (11) verfahrbar ist, und mit zwei Greifarmen (20, 20a) zum Transportieren der Werkzeughalter (17) zwischen beidseits des Spindelstocks (16) befindlichen Entnahme- bzw. Bestückungspositionen (74) im Werkzeugmagazin (29) und einer Spindelposition in einem Spindelkopf (15) des Spindelstocks (11), dadurch gekennzeichnet, daß eine Endlosbahn vorgesehen ist, die U-förmig verläuft, daß sich an beiden Enden (30', 30a') der Schenkel (30a) des U eine Entnahme- bzw. Bestückungsposition (74) befindet und daß der Spindelkopf (15) vor und unterhalb dieser Enden (30', 30a') angeordnet und mit dem Werkzeugmagazin (29) in Richtung der Achse (19) starr verbunden ist.

2. Werkzeugmaschine nach Anspruch 1, dadurch gekennzeichnet, daß die Achse (19) des Spindelstocks (11) und die Entnahme- bzw. Bestückungspositionen (74) symmetrisch an den Ecken eines gleichschenkligen Dreiecks angeordnet sind und daß der Transportweg der Greifarme (20, 20a) in Richtung der gleichen Dreiecksseiten verläuft, wobei die Winkellage der Werkzeughalter (17) während des Transportierens unverändert bleibt.

3. Werkzeugmaschine nach einem der Ansprüche 1 oder 2, dadurch gekennzeichnet, daß der Spindelstock (11) entlang mehrerer Koordinatenachsen verfahrbar ist und daß die Greifarme (20, 20a) ein parallelogrammartiges Gestänge (26, 27/26a, 27a) aufweisen und in Richtungen senkrecht zur Achse (19) des Spindelstocks (11) mit diesem starr verbunden, in einer Richtung parallel zur Achse (19) jedoch verschiebbar sind.

4. Werkzeugmaschine nach einem der Ansprüche 1 bis 3, dadurch gekennzeichnet, daß eine Transportkette (33) entlang der Endlosbahn geführt ist, an der Halter (42) für die Werkzeughalter (17) angelenkt sind und daß zwei synchron angetriebene Antriebsräder (47, 47a) für die Transportkette (33) an den Enden (30', 30a') des U angeordnet sind.

5. Werkzeugmaschine nach Anspruch 4, dadurch gekennzeichnet, daß die Antriebsräder (47, 47a) mittels eines V-förmig verlaufenden Riemens (46), vorzugsweise eines Zahnriemens oder einer Kette, angetrieben werden, wobei sich die Antriebsräder (47, 47a) an den freien Enden der Schenkel (44, 44a) des V und ein Treibrad (45) sowie eine davon beabstandete Rolle (48) sich an deren Schnittpunkt befinden.

6. Werkzeugmaschine nach Anspruch 5, dadurch gekennzeichnet, daß die Rolle (48) als in Richtung zum Treibrad (45) verschiebbare Spannrolle für den Riemen (46) bzw. die Kette ausgebildet ist.

7. Werkzeugmaschine nach Anspruch 4 oder 5, dadurch gekennzeichnet, daß sich die Antriebsräder (47, 47a), das Treibrad (45), die Rolle (48) sowie der Riemen (46) in einem V-förmigen Antriebskasten (31) befinden.

8. Werkzeugmaschine nach Anspruch 7, dadurch gekennzeichnet, daß der Antriebskasten (31) mit seinen freien Schenkeln (41, 41a) das Magazin (29) an dessen freien Schenkeln (30, 30a) trägt und mit der Spitze des V am Spindelstock (11) befestigt ist, wobei Antriebskasten (31) und Magazin (29) vorzugsweise als selbsttragende Aluminium-Konstruktionen ausgebildet sind.

9. Werkzeugmaschine nach einem der Ansprüche 1 bis 8, dadurch gekennzeichnet, daß die Werkzeughalter (17) auf der U-förmigen Endlosbahn des Magazins (29) in gabelartigen Haltern (42) gehalten werden, deren offene Seite vom U weg zeigt, daß eine magazinfeste Führung (Wand 43) entlang der Endlosbahn vor der offenen Seite verläuft, und daß die Führung an den Entnahme-bzw. Bestückungspositionen (74) jeweils eine Öffnung (32, 32a) aufweist.

10. Werkzeugmaschine nach Anspruch 9, dadurch gekennzeichnet, daß die Öffnung (32) von einem bogenförmigen Abschnitt (61) überspannt wird, der das obere Ende eines an seinem unteren Ende schwenkbaren sensenförmigen Halteteiles (62) bildet.

11. Werkzeugmaschine nach einem der Ansprüche 1 bis 10, dadurch gekennzeichnet, daß eine magazinfeste Schieberanordnung senkrecht zur Endlosbahn an den Entnahme- bzw. Bestückungspositionen (74) angeordnet ist, mit der Werkzeughalter (17) aus einseitig offenen, gabelartigen Haltern (42) des Magazins (29) in einen bzw. aus einem ebenfalls gabelartigen Halter (18a) des in Magazinstellung befindlichen Greifarmes (20a) verschiebbar sind.

12. Werkzeugmaschine nach Anspruch 11, dadurch gekennzeichnet, daß die Schieberanordnung (71 bis 73) einen Kopf (73) aufweist, der mit zwei in Verschieberichtung hintereinander angeordneten Abschnitten (86, 87) versehen ist, die den zu verschiebenden Werkzeughalter (17) in beiden Verschieberichtungen formschlüssig halten.

13. Werkzeugmaschine nach Anspruch 12, dadurch gekennzeichnet, daß der vom Greifarm (20a) weg weisende Abschnitt (87) des Kopfes (73) um eine zur Verschieberichtung parallele Achse (88) verschwenkbar ist.

14. Werkzeugmaschine nach einem der Ansprüche 1 bis 13, dadurch gekennzeichnet, daß das Magazin (29) von einer Wand (47, 47') umgeben ist, die mit Ausnahme von Öffnungen (32, 32a) an den Entnahme- und Bestückungspositionen (74) allseits geschlossen ist.

**Revendications**

1. Machine-outil, dotée d'une poupée (11), d'au moins un magasin à outils (29), dans lequel de nombreux porte-outils (17) équipés d'outils (16) peuvent être déplacés le long d'une chaîne conti-nue dans un plan perpendiculaire à l'axe (19) de la poupée (11), de deux pinces (20, 20a) pour le transport des porte-outils (17) entre les positions (74) d-enlèvement, respectivement de mise en place des deux côtés de la poupée (11) dans le magasin à outils (29), et d'une position de la broche dans un nez de broche (15) de la poupée (11), caractérisée en ce qu'il est prévu une chaîne continue en forme de U, en ce qu'aux deux extrémités (30', 30a') des jambes (30a) du U se trouve une position d'enlèvement, respectivement de mise en place (74) et en ce que le nez de broche (15) est situé devant et dessous ces extrémités (30', 30a') et est relié de façon rigide au magasin d'outils (29) dans la direction de l'axe (19).

2. Machine-outil, selon la revendication 1, caractérisée en ce que l'axe (19) de la poupée (11) et les positions d'enlèvement, respectivement de mise en place, sont disposées de façon symétrique sur les sommets d'un triangle équilatéral, et en ce que la trajectoire de transport des pinces (20, 20a) est parallèle aux côtés dudit triangle, la position angulaire du porte-outil (17) restant inchangée durant le transport.

3. Machine-outil, selon l'une des revendications 1 ou 2, caractérisée en ce que la poupée (11) peut être déplacée le long de plusieurs axes de coordonnées et en ce que les pinces (20, 20a) présentent une tringlerie en forme de parallélogramme (26, 27/26a, 27a) et sont reliées à la poupée de façon rigide dans des directions perpendiculaires à l'axe (19) de la poupée (11), mais peuvent être déplacées dans une direction parallèle à l'axe (19).

4. Machine-outil, selon l'une des revendications 1 à 3, caractérisée en ce qu'un transporteur à chaîne (33) est déplacé le long de la chaîne continue, sur laquelle sont articulés des supports (42) pour les porte-outils (17), et en ce que deux roues de commande synchrones (47, 47a) entraî-nant le transporteur à chaîne (33) sont disposées aux extrémités (30', 30a') du U.

5. Machine-outil, selon la revendication 4, caractérisée en ce que les roues de commande (47, 47a) sont entraînées au moyen d'une courroie en V (46), de préférence une courroie crantée ou une chaîne, les roues de commande (47, 47a) se trouvant aux extrémités libres des jambes (44, 44a) du V, tandis qu'une roue motrice (45) et un galet (48) positionné à distance de celle-ci se trouvent au sommet du V.

6. Machine-outil, selon la revendication 5, caractérisée en ce que le galet (48) est un galet tendeur de la courroie (46), respectivement de la chaîne, et peut être déplacé dans la direction de la roue motrice (45).

7. Machine-outil, selon la revendication 4 ou 5, caractérisée en ce que les roues de commande (47, 47a), la roue motrice (45), le galet (48) ainsi que la courroie (46) sont disposés dans le carter en V d'un mécanisme de commande (31).

8. Machine-outil, selon la revendication 7, caractérisée en ce que les jambes libres (41, 41a) du carter du mécanisme de commande (31) supportent les jambes libres (30, 30a) du magasin (29) et en ce que le carter du mécanisme de commande est fixé à la poupée (11) au niveau de la pointe du V, le carter du mécanisme de commande (31) et le magasin (29) étant de préférence des constructions en aluminium autoportantes.

9. Machine-outil, selon l'une des revendications 1 à 8, caractérisée en ce que les porte-outils (17) sont maintenus sur la chaîne continue en forme de U du magasin (29) dans des supports fourchus (42), dont le côté ouvert se trouve vers l'extérieur du U, en ce qu'un carter de guidage solidaire du magasin (paroi 43) longe la chaîne continue devant le côté ouvert desdits supports fourchus, et en ce que le carter de guidage présente chaque fois une ouverture (32, 32a) aux niveaux des positions d'enlèvement, respectivement de mise en place (74).

10. Machine-outil, selon la revendication 9, caractérisée en ce que l'ouverture (32) est recouverte par un segment arqué (61), qui forme l'extrémité supérieure d'une pièce support (62) en forme de faux, qui peut pivoter au niveau de son extrémité inférieure.

11. Machine-outil, selon l'une des revendications 1 à 10, caractérisée en ce qu'un dispositif de coulisses, solidaire du magasin, est disposé perpendiculairement à la chaîne continue aux niveaux des positions d'enlèvement, respectivement de mise en place (74), et permet le transfert de porte-outils (17) hors de supports fourchus (42) du magasin (29) ouverts d'un côté dans, respectivement, hors d'un support (18a), également fourchu, de la pince (20a) qui se trouve en position magasin.

12. Machine-outil, selon la revendication 11, caractérisée en ce que le dispositif de coulisses (71 à 73) présente une tête (73), dotée de deux parties (86, 87) disposées l'une derrière l'autre dans la direction du dispositif de déplacement et maintenant de façon verrouillée les porte-outils (17) devant être déplacés dans les deux directions de transfert.

13. Machine-outil, selon la revendication 12, caractérisée en ce que la partie (87) de la tête (73), qui se trouve à l'opposé de la pince (20a), peut pivoter autour d'un axe (88) parallèle à la direction de transfert.

14. Machine-outil, selon les revendications 1 à 13, caractérisée en ce que le magasin (29) est entouré d'une paroi (43, 43'), qui, à l'exception de deux ouvertures (32, 32a') aux niveaux des positions d'enlèvement, respectivement de mise en place (74), est fermée de tous côtés.

**Claims**

1. Machine tool comprising a spindle stock (11), at least one tool magazine (29) in which a plurality of tool (16) carrying toolholders (17) can be displaced along an endless path in a plane perpendicular to the axis (19) of the spindle stock (11), and two gripper arms (20, 20a) for transferring the toolholders (17) between withdrawal and/or loading positions (74) in the tool magazine (29), which are located on either side of the spindle stock (16), and a spindle position in a spindle nose (15) of the spindle stock (11), characterized in that an endless path is provided, extending along a U shape, a withdrawal or loading position (74) is provided on each end (30', 30a') of the legs (30a) of the said U, and in that the spindle nose (15) is arranged in front of and below the said ends (30', 30a') and rigidly connected with the said tool magazine (29) in the direction of the axis (19).

2. Machine tool according to claim 1, characterized in that the axis (19) of the said spindle stock (11) and the said withdrawal or loading positions (74) are provided in symmetrical arrangement at the ends of an isosceles triangle, and the transfer path of the said gripper arms (20, 20a) extends along the equal sides of the triangle, the angular position of the toolholders (17) remaining unchanged during the transfer movement.

3. Machine tool according to claim 1 or 2, characterized in that the said spindle stock (11) can be moved along several coordinate axes and in that the gripper arms (20, 20a) are provided with a linkage (26, 27/26a, 27a) in the form of a parallelogram and are rigidly connected with said spindle stock (11) in directions perpendicular to the latter's axis (19), but are movable in a direction parallel to the said axis (19).

4. Machine tool according to any of claims 1 through 3, characterized in that a conveyor chain (33) is guided along the said endless path and provided with pivoted holders (42) for the said toolholders (17), and in that two driving wheels (47, 47a) for the conveyor chain (33), which are driven in synchronism, are arranged at the ends (30', 30a') of the U.

5. Machine tool according to claim 4, characterized in that the said driving wheels (47, 47a) are driven via an endless belt (46) arranged in the form of a V, preferably a toothed belt or a chain, the said driving wheels (47, 47a) being arranged at the free ends of the legs (44, 44a) of the V, and an additional driver (45) and a roller (48) provided at a distance from the latter being arranged at the point of intersection of the said legs (44, 44a).

6. Machine tool according to claim 5, wherein the said roller (48) takes the form of a tension roller for the belt (46) or the chain which can be displaced towards the said driver (45).

7. Machine tool according to claims 4 or 5, characterized in that the said driving wheels (47, 47a), the said driver (45), the said roller (48) and the said belt (46) are arranged in a V-shaped drive box (31).

8. Machine tool according to claim 7, characterized in that the free legs (41, 41a) of the said drive box (31) carry the said magazine (29) by the latter's free legs (30, 30a) and the point of the V of the said drive box (31) is fastened at the said spindle stock (11), the said drive box (31) and the said magazine (29) being preferably designed as self-supporting aluminium structures.

9. Machine tool according to any of claims 1 through 8, characterized in that the said toolholders (17) are held on the U-shaped endless path of the said magazine (29) in fork-like holders (42) whose open sides point away from the U, a guide (wall) (43) fixed to the said magazine (31) extends along the endless path in front of the said open side, and in that the said guide is provided with an opening (32, 32a) at each of the withdrawal and loading positions (74).

10. Machine tool according to claim 9, characterized in that the opening (32) is spanned by an arc-shaped portion (61) forming the upper end of a scythe-shaped holding part (62) which is mounted to pivot at its lower end.

11. Machine tool according to any of claims 1 through 10, characterized in that a pusher arrangement fixed to the said magazine extends perpendicularly relative to the endless path at the withdrawal and loading positions (74), which pusher arrangement serves for moving toolholders (17) out of unilaterally open, fork-shaped holders (42) of the said magazine (29) into and out of a likewise fork-shaped holder (18a) of the gripper arm (20a) in the latter's magazine position.

12. Machine tool according to claim 11, characterized in that the said pusher arrangement (71 to 73) comprises a head (73) having two portions (86, 87) arranged one behind the other in the direction of displacement, said portions (86, 87) hold the toolholder (17) to be moved positively in both directions of displacement.

13. Machine tool according to claim 12, characterized in that a portion (87) of the head (73) pointing away from the gripper arm (20a) can be pivoted about an axis (88) extending in parallel to the direction of displacement.

14. Machine tool according to any of claims 1 through 13, characterized in that the magazine (29) is surrounded by a wall (47, 47') which is closed all round, except for openings (32, 32a) provided at the withdrawal and loading positions (74).

Fig.1

Blatt 1 (6)

EP 0 205 030 B1

Fig. 2

Fig. 3

Fig. 4

Fig. 5

Blatt 4 (6)

4

Fig. 6

Fig. 7

Fig. 8